# EUROPEAN PATENT APPLICATION

(11) **EP 2 612 738 A1**
(43) Date of publication of application: **10.07.2013**
(21) Application number: 13150019.1
(22) Date of filing: 02.01.2013
(51) Int. Cl.: B27B 17/02, B23D 59/00, B27G 19/00, B27B 17/00

(54) **Saw blade structure of chain saw, chain saw, work machine, and accessory for saw blade structure of chain saw**

(30) Priority: 05.01.2012 FI 20125017
(71) Applicant: Kvist, Heikki, 90310 Oulu (FI)
(72) Inventor: Kvist, Heikki, 90310 Oulu (FI)
(74) Representative: Alatossava, Mikko

(57) **Abstract**

The invention relates to a saw blade structure of a chain saw that comprises a saw blade (121) for a saw chain (141), a fastening part (122) for fastening the saw blade to a frame part (360) of the chain saw, the frame part (360) being movably fastenable to a boom (110). The saw blade structure (120) also comprises a support structure (200) in the longitudinal direction of the saw blade (121) for bracing the saw blade (121) in such a manner that the support structure (200) is fastenable at least at one point to the side surface of the saw blade (121) and at least at another point to the frame part (360). In addition, the invention relates to a chain saw (112) that comprises said saw blade structure (120) and saw chain (141) arranged to the saw blade (121). In addition, the invention relates to a work machine that comprises a boom (110), to which said saw blade structure (120) or chain saw (112) is fastened. In addition, the invention relates to an accessory for the saw blade structure of the chain saw, wherein the accessory (200) is a support structure (200) bracing the saw blade (121) and fastenable to the side of the saw blade (121) of the saw blade structure, and the support structure (200) is fastenable at least at one point to the side surface of the saw blade (121) and at least at another point to the frame part (360) of the chain saw, which is movably fastenable to the boom (110).

## Description

### Field

The invention relates to a saw blade structure of a chain saw for a work machine with a boom.

### Background

For instance, to keep the area around electric lines free, there is a need to use a saw or cutter mounted to a movable work machine, especially at the end of a boom, reach device or some other arm of the work machine, to cut trees and/or their branches so that the trees or branches do not touch the electric lines due to high wind, snow load or some other factor, for instance.

A prior-art saw structure comprises several rotating blades, but this solution makes the saw heavy and dangerous to use. One known solution is described in publication EP 1759579 that discloses a work machine moving on wheels driven by its motor and having a chain saw at the end of a boom for cutting branches. Publication US 4063359 discloses a structure of the type described above mounted at the end of a boom positioned on the platform of a pick-up truck.

Known solutions are usable in cutting individual branches under good conditions. However, they do not contain or suggest an efficient solution for cutting several branches or trees with a small diameter.

### Brief description

The object of the invention is to implement an improved saw blade structure, i.e. a flange structure, for a work machine in accordance with claim 1.

An object of the invention is a chain saw in accordance with claim 10.

An object of the invention is a work machine in accordance with claim 11.

An object of the invention is an accessory for a chain saw blade structure in accordance with claim 13.

Some preferred embodiments of the invention are described in the dependent claims.

The saw blade structure of the invention provides several advantages. For instance, it provides a structure that is usable in connection with a movable work machine and that is strong enough in even difficult operating conditions. However, the structure is structurally sufficiently simple to make, maintain and handle. In addition, it provides a good bending stiffness, work length, and light structure for the saw blade.

The bending stiffness, or bending resistance, of the saw blade structure according to the invention can also be made substantially greater than in the present saw blade structures. With the solution, it is possible to achieve a greater bending stiffness, which permits the use of longer saw blades than those of the present chain saws. It is possible to increase sawing efficiency and substantially reduce or completely eliminate the many problems caused by the bending of the saw blade. These problems may include the bending of the saw blade so as to become completely unusable, the detachment of the chain from the guide groove of the saw blade during sawing, or heavy wear of the saw blade and chain.

### List of figures

The invention will now be described in greater detail by means of preferred embodiments, with reference to the accompanying drawings, in which
Figure 1 shows a work machine with its boom and chain saw in the working position;
Figure 2 shows a saw blade structure fastened to the end of a work machine boom as seen perpendicular to the saw blade and in accordance with an embodiment;
Figure 3 shows the structure of Figure 2 as seen diagonally and in accordance with an embodiment; and
Figure 4 shows the saw blade structure as seen from the tip of the saw blade and in accordance with an embodiment.

### Description of embodiments

The saw blade structure of the embodiments is intended, for instance, for operating conditions, in which the present solutions cannot offer efficient performance and are susceptible to damage. Such operations are, among other things, vertical cutting of trees (by machine), that is the cutting of branches of a growing tree without damaging it and/or the cutting of trees with a small diameter, of bushes and other undergrowth. Applications for chain saw operations of this type include: for the purpose of preventing power failures, removing branches/trees that have grown too close to the lines; for the purpose of improving the quality of saw log, removing the bottom branches of a growing tree, i.e. vertical cutting; for the purpose of enhancing forest regeneration, cutting the undergrowth, i.e. removing the vegetation that restricts the growth of saplings, or any other cutting of the undergrowth. Medium-voltage electric lines, for instance, are typically positioned in a treeless cut line that is five metres wide. This may mean that the electric line in the middle of the cut line is only a couple of metres away from the trees. The branches of the trees may also extent to the side of the electric line, in which case the branches may touch or press the electric line and possibly also bend the tree toward the electric line. Therefore, it may be necessary to cut the branches on the side of the electric line. This requires precision work, because the distance between the tree and electric line may be very short under the circumstances. It is also necessary to remove the branches efficiently. Therefore, it is advantageous to remove them by machine by using a work machine with a boom or some other arm.

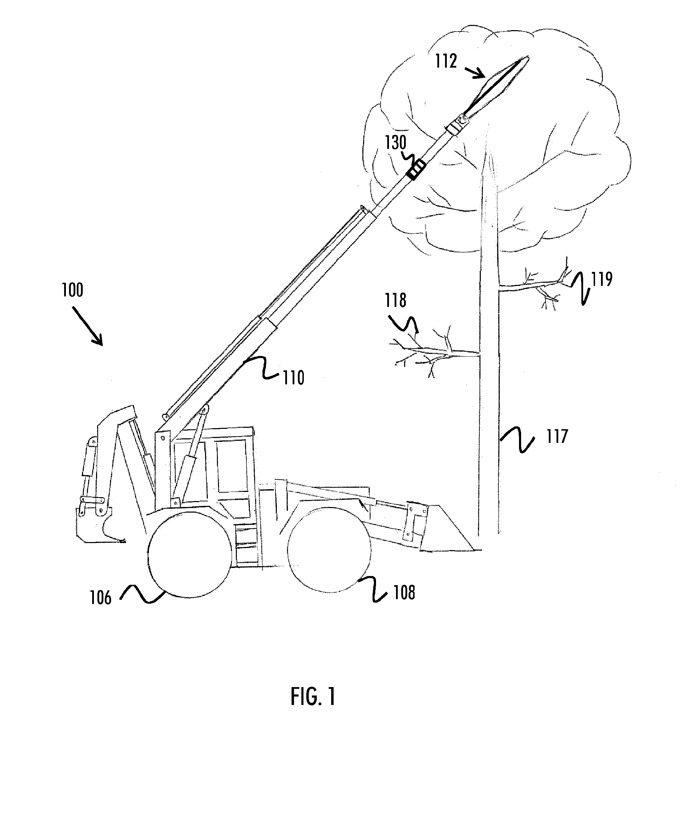

Figure 1 shows a work machine 100 that may be a wheel buggy, motor sled, agricultural tractor, tractor excavator, forest machine, cross-country vehicle or some other truck, excavator, helicopter or some other moving work machine. The work machine comprises a set of booms, a crane or some other set of arms that extends several metres outward. The work machine in Figure 1 is a tractor excavator 100 that comprises wheels 106 and 108. In connection with the work machine, on top of it, for instance, there is a boom 110 that has a chain saw 112. In Figure 1, the work machine 100, boom 110 and the chain saw 112 on the boom 110 are in their work positions. This may relate to cutting the branches 118 to 119 of a tree 117 and/or felling trees with a small diameter under or on the side of the electric line or on the shoulder of a road or some other driving route.

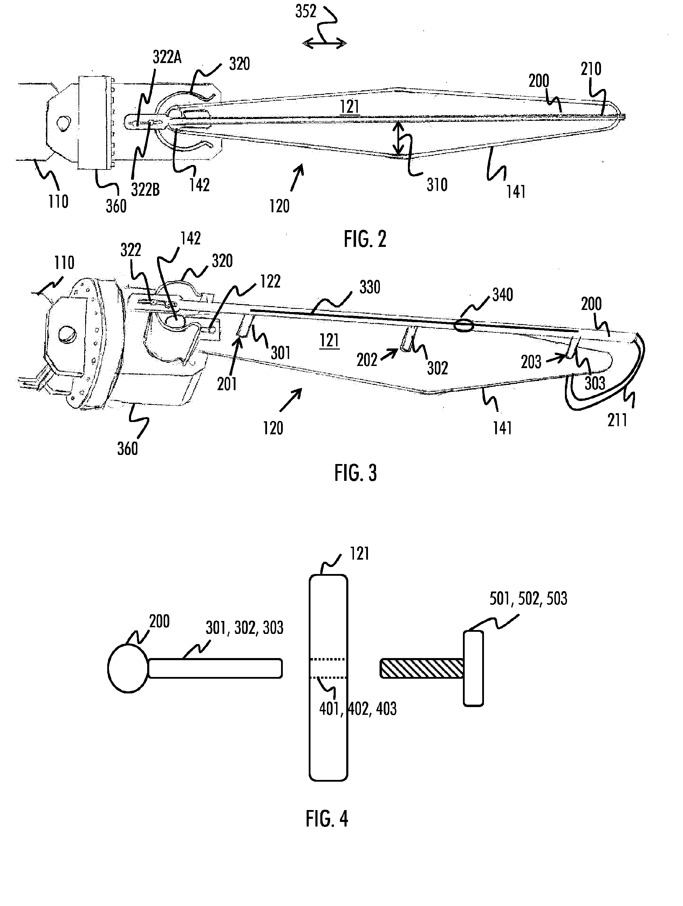

With reference to Figures 2 to 3, invention relates to a saw blade structure 120 of a chain saw 112 for a work machine 100 with a boom, for instance. This saw blade structure 120 comprises a saw blade 121 for a saw chain 141 and a fastening part 122 for fastening the saw blade to a frame part 360. The frame part 360 may be fastened movably to the boom 110. The fastening part 122 in the saw blade 121 may be a slot or some other opening structure, for instance. This fastening part 122 may settle into a counter-piece, such as a bolt or bolts. A motor 142 in the frame part, for instance a hydraulic motor 142 driven by the hydraulics of the work machine 100, may rotate the saw chain 141. The frame part 360 may be seen as part of the boom 110 or as part of the chain saw, or both.

Because the chain saw 112 is fastened to the boom 110 and is operated from below by means of hydraulics, for instance, great forces are applied to the saw blade 121 of the chain saw 112 during operation. These forces may cause damage, such as twisting, to the saw blade 121. This may happen when the saw blade 121 gets stuck in a tree. This type of problem does not exist with manually operated power saws, because you maintain a good contact with the saw and the twisting of the saw blade can easily be prevented by stopping sawing and detaching the saw blade from the tree. But when operating a chain saw with a boom, this type of contact does not exist, and the twisting of the saw blade 121 is possible even when using short saw blades 121. On the other hand, the saw blades that are supported at both ends are not as susceptible to bending as saw blades supported at one end only.

This is why the saw blade structure 120 comprises at least one support structure 200 longitudinal to the saw blade to brace the saw blade. The support structure can also be called a brace. The support structure 200 is fastenable at least at one point to the side surface of the saw blade 121 and at least at another point to the frame part 360. The fastening may be direct, whereby the support structure 200 is fastened to the side surface, that is, the support structure 200 is in contact with the side surface of the saw blade 121. This type of fastening may be done for instance by welding the support structure 200 to the saw blade 121 either in places or over the entire contact surface. Alternatively, the fastening may be indirect, whereby one or more intermediate parts 301 to 303 are used between the support structure 200 and saw blade 121. These fastening methods will be discussed in more detail later. Fastening to the frame part 360 permits a strong support for the support structure 200 and saw blade 121. In an embodiment, the support structure 200 is fastened at two spaced apart points 322A, 322B to the frame part 360, as shown in Figure 3. This assists in providing reliable and strong support, because a two-point fastening prevents the support structure 200 from turning in relation to the frame part 360.

The support structure 200 may be a hollow or solid steel pipe, for instance. The support structure may be arranged on one side of the saw blade 121. In an embodiment, the support structure 200 may be formed of several separate or attached parts, such as consecutive parts. These parts may be attached to each other by a thread. This makes it possible to remove one or more parts from the support structure. For instance, the support structure 200 may need to be shortened by detaching a part from the end of the support structure 200 without affecting the bending stiffness of the saw blade, however. This may be useful to make the saw blade structure through-sawing at the location of the removed part. It is then possible to saw thick trees and branches with this part of the saw blade.

In an embodiment, the saw blade 121 may be relatively long, at least 150 cm, for instance. In an embodiment, the length of the saw blade 121 is approximately 200 cm. In an embodiment, the saw blade 121 may consist of one uniform structure, for instance, in which a groove has been cut for the saw chain 141. Among other things, a long saw blade permits the cutting of branches that are high/far, even though the boom did not reach as high/far. On the other hand, this also makes it possible that the boom need not necessarily go between the electric line and trees but may be kept below the electric line. This reduces the risk of an electric shock. However, as already mentioned, even short saw blades that are less than one metre long, for example, may be damaged when they are used under remote control with a work machine. Therefore, the length of the saw blade 121 according to the embodiments may vary freely.

In an embodiment, with reference to Figures 3 to 5, the bracing support structure 200 is at least partly or entirely alongside the saw blade 121 and fastened to the side surface of the saw blade 121 with at least one intermediate part 301 to 303 of the support structure 200. This intermediate part 301 to 303 may distance the support structure 200 from the side surface of the saw blade 121. Each intermediate part 301 to 303 may fasten to a corresponding fastening member of the saw blade 121, which comprises at least one opening 401 to 403 that transversely penetrates the saw blade 121. In addition to this, the base of the support structure 200 is also fastened to some other part than the saw blade 121 to enable the required support. As said, this other part may be the frame part 360, that is a piece to which the saw blade 121 is also fastened. The fastening point 322 need not be at the very base of the support structure 200 but it is enough that the support structure 200 is fastened to the frame part 360 in the vicinity of the base. This also makes possible a simpler saw blade 121 structure, because a minimum of only one fastening point 201 to 203 is needed for the saw blade 121. Naturally, this base support can also be applied when the support structure 200 is fastened to the saw blade 121 at two or more points, as shown in Figures 3 and 4.

The fastening point 322 may comprise a fastening that permits moving. This type of fastening may be implemented by a slot, for instance. Thus, in addition to the adjustable fastening (slot 122) of the saw blade 121, the support structure 200, too, may be adjustably fastened in relation to the frame part 360. This provides the advantage, for example, that when moving the saw blade 121 to tighten the saw chain, among other things, it is also possible to move the support structure 200. In addition, the support structure is also replaceable in case of damage. Replacement is done easily by detaching the support structure 200 at least at two of its fastening points, for instance. This also makes it possible to post-install the support structure 200 to the saw blade 121.

If in the saw blade 121 there are two or more openings 401 to 403 suitable for fastening the support structure 200, these openings 401 to 403 are spaced apart in the longitudinal direction 352 of the saw blade 121. In an embodiment, in particular, the support structure 200 is alongside the saw blade 121 and fastened at least at two spaced apart fastening points 201 to 203 to the side of the side surface of the saw blade 121. Figure 4 shows three fastening points 201 to 203. This figure also shows that in an embodiment, the support structure 200 is distanced from the saw blade 121 with two or more intermediate parts 301 to 303. This reduces the risk of damage to the saw blade 121. In addition, the space between the saw blade 121 and support structure 200 makes it possible to allow snow or small branches to fall through. Without this, snow might accumulate on the saw blade 121 and support structure 200 and cause problems.

In the embodiment shown in Figure 5, the saw blade structure comprises fastening members at the fastening points 201 to 203 for fastening the support structure 200. The fastening member, in turn, comprises an opening 401 to 403 that transversely penetrates the saw blade 121. If there are several openings, they may be spaced apart. The spaced apart openings may be located at the beginning and end of the saw blade 121 in the longitudinal direction, that is, on different halves of the saw blade 121. The fastening members also comprise fastening parts 501 to 503, such as bolts, for fastening the support structure 200 at the openings 401 to 403 of the saw blade 121. The support structure 200 may be fastened to the saw blade 121 with intermediate parts 301 to 303. They may be of the same uniform structure as the support structure 200. As said, the support structure 200 may be distanced from the saw blade 121 by the length of the intermediate part 301 to 303, such as 5 to 30 cm. The intermediate part 301 to 303 may be a part that is separate from the support structure 200. Alternatively, the intermediate part may be integrated to the support structure 200. Alternatively, the intermediate parts 301 to 303 may also be integrated, by welding, for instance, to the side surface of the saw blade 121. The intermediate part 301 to 303 may have threads for fastening a bolt 501 to 503 to the intermediate part 301 to 303. Alternatively, the support structure 200 with its intermediate parts may be welded to the saw blade 121.

In an embodiment, the distance between the fastening points 201 and 203 of the support structure 200 is at least 50% of the length of the saw blade 121. In other words, in the case of a 200 cm long saw blade 121, for instance, the distance between the fastening points is at least 100 cm in the longitudinal direction 352. Alternatively or in addition to this, the length of the support structure 200 may be at least 75% of the length of the saw blade 121, though it may be useful that the support structure 200 is longer than the saw blade 121. The support structure 200 may be fastened to the saw blade 121 along its entire length or only at some fixed or detachable fastening points.

In an embodiment where the support structure 200 is formed of at least two consecutive parts detachably attached to each other, the removal of one part to permit through-sawing can be done, for example, by having the support structure 200 end after the fastening point 202. In other words, the support structure 200 is at its base fastened to the support frame 360 and at its tip to the fastening part 202. In addition, there may be several fastening points to the saw blade 121, including the fastening point 201. In such a case, the intermediate part 303 and fastening part 503, such as bolt, may be removed from the tip area of the saw blade 121, thus permitting through-sawing on the side of the saw blade tip, such as on the part between the fastening point 202 and saw blade 121 tip. Naturally, there may be several fastening points 201 to 203 to the saw blade, and the support structure 200 may be formed of more than two consecutive parts. The length of the detachable part may thus be selected in such a manner that the bending stiffness of the saw blade 121 does not suffer too much.

In an embodiment, at the base of the support structure 200, there is a protective groove 320 for minimizing the risk of danger caused by the detaching of the saw chain. This protective groove 320 provides the advantage, for example, that if the saw chain 141 detaches or breaks for some reason, the saw chain 141 cannot strike toward the work machine where the operator of the chain saw controls the saw. As seen in Figure 4, the protective groove 320 is preferably as wide as the intermediate parts 301 to 302. The protective groove 320 may be an integral part of the frame part 360, whereby the support structure 200 also fastens to the frame part 360 through the protective groove 320.

In an embodiment, the tip 210 of the bracing support structure 200 (i.e. the end opposite to the boom) extends further than the tip of the saw blade 121. In such a case, it is possible that the support structure 200 is partly or entirely wound around the end of the saw blade 121. In addition, a curve 211 of the support structure 200 tip may be at least partly on both sides of the saw blade 121 at the end thereof. In other words, the tip 210 of the bracing support structure may comprise a curve 211 toward the front side area of the saw blade 121 tip. This may minimize the risk that the tip of the saw blade 121 or the saw chain 141 in it hits a tree, electric line or something else. Said curve 211 thus protects the saw blade 121 and guides the saw blade 121 in a narrow space. The other end of the curve 211 may be fastened to the other side surface of the saw blade 121 by means of a fastening point 203, for instance. It is also possible that the curve 211 is not fastened at its other end and is loose.

If the intention is to work close to electric lines or other corresponding places, it is advantageous that in one embodiment, the support structure 200 comprises an insulation that minimizes conductivity on at least part of its outer surface. This insulation may be a plastic coating on the outer surface of the support structure 200, for example. In an embodiment, the support structure 200 is in its entirety made of material that minimizes or prevents conductivity. This prevents the conduction of an electric arc or a contact electric shock to the saw blade 121, boom 110, work machine 100, and/or operator of the work machine. For instance, when the support structure 200 hits an electric line, electricity cannot conduct to the saw, boom, and work machine, because the support structure 200 preferably comprises electrically non-conducting material at least in part of its structure. This non-conductivity is also assisted by the distancing of the saw blade 121 by means of the intermediate parts 301 to 303.

In an embodiment, there is a measuring sensor 340 or some other accessory at the saw blade structure 120. In an embodiment, this measuring sensor 340 is in connection with the support structure 200 of the saw blade structure 120. Naturally, said measuring sensor 340 may also be at the saw blade 121, frame part 360 or some other corresponding location. Said measuring sensor 340 may be a sensor 340 that measures the proximity of an electric line or some other current conductor and is in a wired or wireless connection with an indication member, such as indicator light or sound generator, so that the operator of the work machine notices a dangerous situation. The indicator light may be in the cabin of the work machine or outside it within the visual range of the operator. The sound generator should be inside the cabin of the work machine, possibly even in a headset worn by the operator. In an embodiment, the measuring sensor 340 controls the work machine 100 by wire or wirelessly in such a manner that when detecting an electric wire in a certain direction and at a certain distance, the work machine 100 does not allow the chain saw to move toward the electric wire. This embodiment automatically prevents the operator from even accidentally moving the saw into contact with the wire. The measuring sensor 340 contains the required electronics, such as at least one processor, communication means and electric/magnetic field detection means.

In an embodiment, in connection with the support structure 200, there is a cable required by the measuring sensor 340 or other accessories to provide power to the measuring sensor 340 and possibly to act as a transmitter of control signals between the work machine 100 and sensor 340.

In an embodiment, in connection with the bracing support structure 200, there is a transport channel 330 for a liquid substance. The destination of the liquid substance may be the cam wheel of the saw blade 121 or some other destination. The transport channel 330 may for instance be a lubrication pipe or the like arranged to the support structure 200. Another possible destination for the liquid transported by the transport channel 330 may be a tree to be sawn that needs to be treated with urea or the like. In an embodiment, these additional features are implemented in such a manner that the measuring sensor 340, some other accessory, cable, transport channel or some other lubrication channel is at least partly inside the support structure 200.

Thus, the support structure 200 may in an embodiment also be used as a channel for the substance required in a lubrication process or some other work process, for instance to lubricate the chain idler of the saw blade 121 or treat the stump or some other target with urea or the like. The treatment liquid or other substance may be lubricating oil or urea or some other appropriate liquid substance. Figure 4 shows the transport channel 330 running at least partly inside the support structure 200. The liquid may flow first on the saw blade 121 and then move through the intermediate parts 301 to 303 to flow along the support structure 200, for instance. Alternatively, the substance may be fed into the support structure 200 right at the start through the fastening point 322, for example. These embodiments related to the transport channel 330 may permit efficient lubrication and/or urea treatment and make it possible to avoid using the saw blade 121 for this purpose, whereby the saw blade 121 can be made into a stronger entity, for instance.

In addition to the saw blade structure described above, the invention can be seen as an accessory for the chain saw 112 saw blade structure 120. Said accessory is a support structure 200 fastenable to the side of the saw blade 121, longitudinal to the saw blade 121 and of the type described above. With reference to what is stated above, in one embodiment, the support structure 200 is made of or has on its outer surface material that minimizes electrical conductivity. The coating of the support structure 200 may be rubber or plastic, for instance.

In addition, the invention may be seen as a work machine 100 that comprises a boom or some other arm 110, to which the above saw blade structure 120 is fastened. In an embodiment, the lifting device of the work machine 100, such as boom 110, comprises an intermediate piece 130 that minimizes conductivity, as shown in Figure 2. This is very advantageous in terms of safety.

In an embodiment, the invention comprises a chain saw that comprises the saw blade structure 120 described above and a saw chain 141 arranged in a saw blade 121. In addition, the chain saw may comprise a frame part 360 and set of joints for moving the chain saw in relation to the boom.

In an embodiment, the shape of the saw blade 121 may be elongated relative to the height as shown in the figures. However, it is possible that the shape is mainly triangular or even round or some other shape. In an embodiment, the sawing thickness of the saw blade can be increased or decreased by means of the design of the saw blade 121, for instance by widening it in the sawing direction and/or shifting the location of the support structure 200, whereby the distance 310 in Figure 2 changes.

Even though the invention is described above with reference to the examples of the attached drawings, it is clear that the invention is not restricted to them, but may be modified in a variety of ways within the scope of the accompanying claims.

## Claims

1. A saw blade structure for a chain saw, which comprises a saw blade (121) for a saw chain (141) and a fastening part (122) for fastening the saw blade to a frame part (360) of the chain saw, the frame part (360) being movably fastenable to a boom (110),
**characterised in that** the saw blade structure of the chain saw also comprises a support structure (200) longitudinal to the saw blade (121) for bracing the saw blade (121) in such a manner that the support structure (200) is fastenable at least at one point to the side surface of the saw blade (121) and at least at another point to the frame part (360).

2. A saw blade structure as claimed in claim 1, c h a r a c t e r i s e d in that:
the support structure (200) is at least partly alongside the saw blade (121) and fastened to the side surface of the saw blade (121) with at least one intermediate part (301 to 303) of the support structure (200) that distances the support structure (200) from the side surface of the saw blade (121); and
each intermediate part (301 to 303) fastens to a corresponding fastening member of the saw blade (121) that comprises at least one opening (401 to 403) transversely penetrating the saw blade (121), and when there are at least two openings (401 to 403), these openings (401 to 403) are spaced apart as seen in the longitudinal direction of the saw blade (121).

3. A saw blade structure as claimed in any one of preceding claims 1 to 2, **characterised in that** the tip (210) of the support structure (200) extends further than the tip of the saw blade (121); and
the tip (210) of the support structure is at least partly wound around the tip of the saw blade (121).

4. A saw blade structure as claimed in any one of preceding claims 1 to 3, **characterised in that** the base of the support structure (200) comprises a protective groove (320) that minimizes the risk of danger caused by the detachment of the saw chain.

5. A saw blade structure as claimed in any one of preceding claims 1 to 4, **characterised in that** on at least part of its outer surface, the support structure (200) comprises an insulation minimizing conductivity.

6. A saw blade structure as claimed in any one of preceding claims 1 to 5, **characterised in that** in connection with the saw blade structure, there is a measuring sensor (340) that measures the proximity of an electric line or some other current conductor.

7. A saw blade structure as claimed in any one of preceding claims 1 to 6, **characterised in that** in connection with the saw blade structure, there is a transport channel (330) for a liquid substance for a cam wheel of the saw blade (121) or some other object.

8. A saw blade structure as claimed in claim 6 or 7, **characterised in that** one or more of the following is at least partly inside the support structure (200): measuring sensor (340), cable for the measuring sensor (340), pipe or some other transport channel (330).

9. A saw blade structure as claimed in any one of preceding claims 1 to 8, **characterised in that** the support structure (200) consist of at least two consecutive parts that are detachably fastened to each other.

10. A chain saw that comprises a saw blade structure (120) and saw chain (141) arranged to a saw blade (121) as claimed in any one of preceding claims 1 to 9.

11. A work machine comprising a boom (110), **characterised in that** a saw blade structure (120) or chain saw (112) as claimed in any one of preceding claims 1 to 10 is fastened to the boom (110).

12. A work machine as claimed in claim 11, **characterised in that** the boom (110) comprises an intermediate part (130) that minimizes conductivity.

13. An accessory for a saw blade structure of a chain saw, **characterised in that** the accessory is a support structure (200) bracing the saw blade (121) and fastenable to the side of the saw blade (121) of the saw blade structure, and the support structure (200) is fastenable at least at one point to the side surface of the saw blade (121) and at least at another point to a frame part (360) of the chain saw that is movably fastenable to the boom (110).
